# EUROPEAN PATENT SPECIFICATION

(11) **EP 3 115 997 B1**
(45) Date of publication and mention of the grant of the patent: **06.03.2019**
(21) Application number: 15758663.7
(22) Date of filing: 28.01.2015
(51) Int. Cl.: H01B 12/00, H02G 15/34

(54) **SUPERCONDUCTING CABLE LINE**
SUPRALEITENDE KABELTRASSE
LIGNE DE CÂBLE SUPRACONDUCTEUR

(30) Priority: 06.03.2014 JP 2014044364; 12.11.2014 JP 2014230242
(43) Date of publication of application: 11.01.2017
(73) Proprietor: Sumitomo Electric Industries, Ltd., Osaka-shi, Osaka 541-0041 (JP)
(72) Inventor: OHYA, Masayoshi, Osaka-shi Osaka 554-0024 (JP); HONJO, Shoichi, Tokyo 100-8560 (JP); MARUYAMA, Osamu, Tokyo 100-8560 (JP); NAKANO, Tetsutaro, Tokyo 100-8560 (JP)
(74) Representative: Desormiere, Pierre-Louis
(86) International application number: PCT/JP2015/052277
(87) International publication number: WO 2015/133204

(56) References cited:
- WO-A1-2013/072124
- JP-A- 2007 519 383
- JP-A- 2010 238 427
- JP-A- 2010 238 427
- JP-A- 2011 003 468
- JP-A- 2013 140 764

## Description

### TECHNICAL FIELD

The present invention relates to a superconducting cable line in which a superconducting cable is installed, and to a thermal insulation pipeline suitable for constituent members of the superconducting cable line. In particular, the present invention relates to a superconducting cable line with a low load on a refrigerator which cools refrigerant.

### BACKGROUND ART

The superconducting cable is capable of transmitting a large amount of electric power with a low loss as compared with the existing normal conducting cable (such as OF cable or CV cable for example), and is therefore expected as an energy saving technology. Recently, proof tests have been conducted by installing a superconducting cable and actually transmitting electric power through the superconducting cable.

A typical superconducting cable includes a cable core having a superconducting layer (a superconducting conductor layer and a superconducting shield layer) formed of a superconducting wire wound in a spiral shape around the outer periphery of a former, the cable core is housed in a thermal insulation pipe, and refrigerant (liquid nitrogen for example) is flown in the thermal insulation pipe to thereby cool the superconducting layer (PTD 1). Since the superconducting shield layer is provided, induced current which is opposite in direction and substantially identical in magnitude to the current flowing in the superconducting conductor layer flows in this superconducting shield layer. A magnetic field generated by the induced current cancels a magnetic field generated from the superconducting conductor layer to thereby suppress leakage of the magnetic field to the outside (generation of leakage magnetic field). The thermal insulation pipe is generally a double structure pipe having an inner pipe and an outer pipe. A vacuum is produced in a space between the inner pipe and the outer pipe to form a vacuum thermal insulation layer in this space.

### CITATION LIST

### PATENT DOCUMENT

PTD 1: Japanese Patent Laying-Open No. 2006-59695

Reference is likewise made to the prior art documents JP2013140764, JP2010238427 and WO2013072124.

### SUMMARY OF INVENTION

### TECHNICAL PROBLEM

It has been studied to make the superconducting cable practical, by additionally installing the superconducting cable in an existing underground pipeline or cable tunnel in which a normal conducting cable has already been installed. However, if the superconducting cable and the normal conducting cable are arranged close to each other, there is a possibility that the superconducting cable is influenced by a magnetic field from the normal conducting cable.

It has also been studied to install the superconducting cable in place of the normal conducting cable. In this regard, it has been studied to provide no superconducting shield layer in order to reduce the cost of the superconducting cable. However, from the superconducting cable without the superconducting shield layer, a leakage magnetic field is generated. Therefore, if a plurality of superconducting cables are arranged close to each other and a superconducting cable without a superconducting shield layer is included in the plurality of superconducting cables, the other superconducting cables are influenced by the leakage magnetic field.

When a magnetic field is externally applied to the superconducting cable, the magnetic field is applied first to the thermal insulation pipe. Since the thermal insulation pipe is generally made of a metal material, there is a possibility that the magnetic field applied to the thermal insulation pipe causes an eddy current and thereby Joule heating, resulting in an eddy current loss. The eddy current loss generated in the thermal insulation pipe causes a load on a refrigerator which cools refrigerant with which the inside of the thermal insulation pipe is filled. It is accordingly desired to develop a thermal insulation pipeline and a superconducting cable line with a low load on the refrigerator for refrigerant, even when influenced by an externally applied magnetic field.

The present invention has been made in view of the above-described circumstances, and an object of the present invention is to provide a superconducting cable line with a low load on a refrigerator which cools refrigerant.

Another object of the present invention is to provide a thermal insulation pipeline with a low load on a refrigerator which cools refrigerant.

### SOLUTION TO PROBLEM

The present invention is directed to a superconducting cable line according to the independent device claim 1.

### ADVANTAGEOUS EFFECTS OF INVENTION

The above-described superconducting cable line exerts a low load on a refrigerator which cools refrigerant, even when influenced by an externally applied magnetic field.

The above-described thermal insulation pipeline also exerts a low load on a refrigerator which cools refrigerant, even when influenced by an externally applied magnetic field.

### BRIEF DESCRIPTION OF DRAWINGS

Fig. 1 is a schematic transverse cross-sectional view of a superconducting cable line in a first embodiment.
Fig. 2 is a schematic transverse cross-sectional view of a superconducting cable line in a second embodiment.

### DESCRIPTION OF EMBODIMENTS

### [Description of Embodiments of the Invention]

The inventors of the present invention have studied an eddy current loss which is generated in the thermal insulation pipe when influenced by a magnetic field externally applied to the superconducting cable (this magnetic field may hereinafter be referred to as external magnetic field). Since the thermal insulation pipe of the superconducting cable is filled with refrigerant such as liquid nitrogen, the thermal insulation pipe is generally made of a material such as stainless steel which is excellent in resistance to the operating temperature of the superconducting cable. When a magnetic field is applied to a metal material such as stainless steel, an eddy current is generated in the metal material to cause Joule heating, resulting in an eddy current loss. In view of this, three single-core superconducting cables each having no superconducting shield layer were arranged close to each other, and an eddy current loss generated in the thermal insulation pipe of each superconducting cable was examined by the FEM (Finite Element Method) analysis. As a result, it was found that an eddy current flowed in each of both the inner pipe and the outer pipe of the thermal insulation pipe to thereby generate a large eddy current loss. A reason why the eddy current loss is generated in both the inner pipe and the outer pipe is considered as follows. When an external magnetic field is applied to the superconducting cable, the external magnetic field is applied first to the outer pipe and an eddy current loss is generated in this outer pipe, and accordingly the external magnetic field is reduced to a certain extent. However, while the magnetic field is reduced to a certain extent in the outer pipe, the magnetic field which cannot be reduced in the outer pipe is applied through the outer pipe to the inner pipe and thereby generate an eddy current loss in the inner pipe as well. The outer pipe is exposed to the external environment (room temperature portion) and the Joule heat due to the eddy current is released toward the room temperature portion, and therefore a resulting influence on the load on a cooling mechanism (refrigerator) which cools refrigerant is small. In contrast, the inner pipe is located to contact the refrigerant (located on the side of a low temperature portion), and therefore the Joule heat due to the eddy current is released toward the refrigerant. Accordingly, the eddy current loss generated in the inner pipe exerts a large influence on the load on the refrigerator. In order to reduce the load on the refrigerator, the eddy current loss generated in the inner pipe should be reduced as much as possible. It was found as a result of the aforementioned FEM analysis that the eddy current loss generated in the inner pipe is approximately 5 to 10 W/m, namely nonnegligibly large. In view of this, it was studied to shield the superconducting cable from the influence of the external magnetic field, and the present invention was finally completed. In the following, details of the embodiments of the present invention will be described one by one.
(1) A superconducting cable line according to an embodiment of the present invention includes a superconducting cable and a magnetic shield member in a plate shape. The superconducting cable includes: a cable core having a superconducting conductor layer; and a thermal insulation pipe housing the cable core and having an inner pipe to be filled with refrigerant and an outer pipe disposed outside the inner pipe. The magnetic shield member is disposed between the superconducting cable and a magnetic field generating cable configured to apply a magnetic field to the superconducting cable, and the magnetic shield member is configured to shield the superconducting cable from the magnetic field. The magnetic shield member has a ferromagnetic layer made of a ferromagnetic material, and the magnetic shield member is electromagnetically independent of a different member made of a ferromagnetic material.
   The specific meaning of each of the elements defined for the embodiment is as follows. "A magnetic field generating cable configured to apply a magnetic field to the superconducting cable" may for example be a normal conducting cable disposed close to the superconducting cable, or a superconducting cable having no superconducting shield layer. If a plurality of superconducting cables each having no superconducting shield layer are provided, these superconducting cables which also serve as the magnetic field generating cables exert influences of respective magnetic fields on each other.
   "A different member made of a ferromagnetic material" may for example be magnetic shield members among a plurality of magnetic shield members in the case where the plurality of magnetic shield members are provided in the superconducting cable line, or a constituent member of the superconducting cable line other than the magnetic shield member (such as a cable tunnel or a support platform supporting each cable in the cable tunnel for example). In the case where a plurality of magnetic field generating cables are provided, separate magnetic shield members are each interposed between the superconducting cable and a corresponding one of the plurality of magnetic field generating cables.
   "Electromagnetically independent" means that a plurality of members are separated and discontinuous as an electrical conduction path or magnetic path. Therefore, even if a plurality of magnetic shield members are mechanically coupled to each other by a nonmagnetic and non-electrically-conductive member such as plastic, the magnetic shield members are still "electromagnetically independent" of each other.
   According to the above-described features, the magnetic shield member interposed between the superconducting cable and the magnetic field generating cable can shield the superconducting cable from a magnetic field (external magnetic field) generated by the magnetic field generating cable. Since the magnetic shield member has the ferromagnetic layer, magnetic flux lines of the external magnetic field applied to the magnetic shield member can be guided along the ferromagnetic layer and the orientation of the external magnetic field can be changed by the ferromagnetic layer. In the external magnetic field applied to the superconducting cable (thermal insulation pipe), chiefly a vertical magnetic field is a main cause of generation of the eddy current loss in the thermal insulation pipe. Therefore, the orientation of the vertical magnetic field can be changed to reduce the external magnetic field causing the eddy current loss. Thus, in the superconducting cable (thermal insulation pipe), generation of the eddy current loss due to the external magnetic field can be suppressed. Since it is possible to reduce the eddy current loss generated particularly in the inner pipe located on the side of the low-temperature portion, the load on the refrigerator can be reduced.
   Since the magnetic shield member is electromagnetically independent of a different member made of a ferromagnetic material (ferromagnetic member), the eddy current loss due to the external magnetic field can be reduced in the magnetic shield member. The larger the volume of the magnetic shield member, the larger the eddy current loss. Although it is necessary for the magnetic shield member to have a size enabling the superconducting cable to be shielded from the external magnetic field, the magnetic shield member is independent of a different ferromagnetic member and therefore the magnetic shield member can be prevented from becoming large to an unnecessary extent and the eddy current loss can be reduced. Moreover, since the magnetic shield member is independent of a different ferromagnetic member, the eddy current path can be divided and the eddy current loss can be reduced. Since the eddy current loss is reduced in the magnetic shield member, the effect of shielding by this magnetic shield member can be improved and the eddy current loss in the thermal insulation pipe can also be reduced.
(2) In an example of the superconducting cable line, the superconducting cable is three superconducting cables each additionally serving as the magnetic field generating member, and the three superconducting cables are disposed in a triangular arrangement. At this time, the magnetic shield member is magnetic shield members each disposed between corresponding superconducting cables among the three superconducting cables.
   In the superconducting cable line, three superconducting cables each having no superconducting shield layer may be disposed in a triangular arrangement. At this time, each superconducting cable also serves as the magnetic field generating cable. Therefore, the superconducting cables exert influences of respective magnetic fields on each other. Since the magnetic shield members are each disposed between corresponding superconducting cables, the external magnetic field causing the eddy current loss can be reduced in each superconducting cable (thermal insulation pipe). Since each magnetic shield member is electromagnetically independent, the eddy current loss due to the external magnetic field can be reduced in each magnetic shield member.
(3) In an example of the superconducting cable line, the ferromagnetic layer may have a saturated magnetic flux density of not less than 1 T.
   According to the above-described features, the ferromagnetic layer produces an increased effect of changing the orientation of the external magnetic field (vertical magnetic field), and therefore the thickness of the ferromagnetic layer can be reduced. Accordingly, the volume of the ferromagnetic layer can be reduced, and therefore the eddy current loss is still easier to reduce in the magnetic shield member.
(4) In an example of the superconducting cable line, the ferromagnetic layer may have an electrical conductivity of not more than 5 MS/m.
   According to the above-described features, the eddy current flowing in the ferromagnetic layer can further be reduced, and therefore the eddy current loss in the magnetic shield member is still easier to reduce.
(5) In an example of the superconducting cable line, the magnetic shield member may have a thickness of not less than 2 mm and not more than 10 mm.
   According to the above-described features, the eddy current loss in the magnetic shield member is further reduced, and the eddy current loss in the thermal insulation pipe is easy to reduce. Since the thickness of the magnetic shield member is not less than 2 mm, the superconducting cable (thermal insulation pipe) can sufficiently be shielded from the external magnetic field applied to the superconducting cable, and the eddy current loss in the thermal insulation pipe is easy to reduce. In contrast, the magnetic shield member having a greater thickness accordingly has a greater volume, and therefore the eddy current loss in the magnetic shield member is likely to increase. Thus, the fact that the thickness of the magnetic shield member is not more than 10 mm enables the volume of the magnetic shield member to be reduced, and enables the eddy current loss in the magnetic shield member to be reduced. Since the eddy current loss in the magnetic shield member is reduced, the shielding effect produced by the magnetic shield member can be improved, and the eddy current loss in the thermal insulation pipe is easier to reduce.
(6) In an example of the superconducting cable line, the magnetic shield member is a laminated body made up of a plurality of the ferromagnetic layers superposed with an electrically insulating material interposed in between.
   According to the above-described features, the ferromagnetic layers can each have a smaller thickness in the magnetic shield member than the thickness of the ferromagnetic layer in the magnetic shield member which is formed of this single ferromagnetic layer, on the condition that respective thicknesses of the magnetic shield members are identical to each other, and therefore the eddy current loss in the magnetic shield member is still easy to reduce. The electrically insulating material is interposed between each ferromagnetic layer and a corresponding ferromagnetic layer, and thus the eddy current flows independently in each ferromagnetic layer. However, the reduced thickness of each ferromagnetic layer enables reduction of the eddy current loss in each ferromagnetic layer. Since the eddy current loss in each ferromagnetic layer is reduced, the eddy current loss in the magnetic shield member (the sum of respective eddy current losses of the ferromagnetic layers) can be reduced.
(7) In the example of the superconducting cable line of above (6), the ferromagnetic layers may each have a thickness of not more than 0.5 mm.
   In the case where the magnetic shield member is the laminated body, the fact that each ferromagnetic layer has a thickness of not more than 0.5 mm makes it still easier to reduce the eddy current loss in the magnetic shield member.
(8) In an example of the superconducting cable line, the ferromagnetic layer may be an electromagnetic steel sheet.
   Since the ferromagnetic layer is an electromagnetic steel sheet, the electrical conductivity can be reduced while a saturated magnetic flux density of not less than 1 T is ensured. Therefore, the eddy current loss in the magnetic shield member can further be reduced, and the eddy current loss in the thermal insulation pipe in the superconducting cable can further be reduced.
(9) A thermal insulation pipeline according to an embodiment of the present invention includes: a thermal insulation pipe having an inner pipe to be filled with refrigerant and an outer pipe disposed outside the inner pipe; and a magnetic shield member in a plate shape disposed between the thermal insulation pipe and a magnetic field generating cable configured to apply a magnetic field to the thermal insulation pipe, the magnetic shield member being configured to shield the thermal insulation pipe from the magnetic field. The magnetic shield member has a ferromagnetic layer made of a ferromagnetic material, and the magnetic shield member is electromagnetically independent of a different member made of a ferromagnetic material.

According to the above-described features, the thermal insulation pipe filled with refrigerant can be shielded from the magnetic field (external magnetic field) generated by the magnetic field generating cable, and generation of the eddy current loss in the thermal insulation pipe due to the external magnetic field can be suppressed. Since the eddy current loss generated in the thermal insulation pipe, particularly in the inner pipe located on the side of the low temperature portion, can be reduced, the load on the refrigerator can be reduced.

### [Details of Embodiments of the Invention]

Details of the embodiments of the present invention will be described in the following. It is intended that the present invention is not limited to these illustrated embodiments but defined by claims. In the drawings, the same reference characters denote identically named elements.

### <First Embodiment>

### [Superconducting Cable Line]

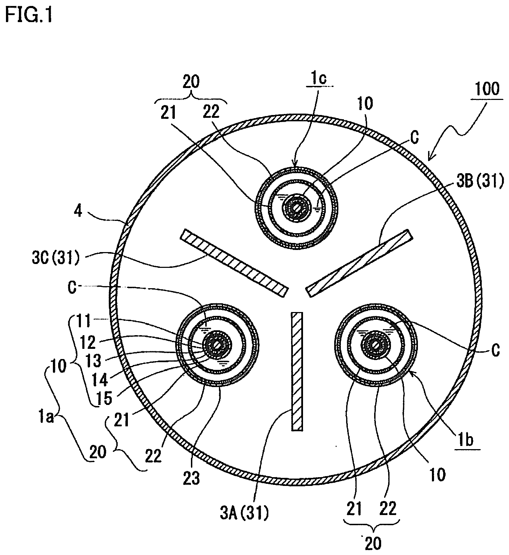

As shown in Fig. 1, a superconducting cable line 100 in a first embodiment includes three superconducting cables 1a, 1b, 1c that are installed in one cable tunnel 4 and disposed close to each other in a triangular arrangement (for example, the center-to-center distance between the superconducting cables is approximately not less than 100 mm and not more than 500 mm). Superconducting cable line 100 in the first embodiment is chiefly characterized by that superconducting cables 1a, 1b, 1c each have no superconducting shield layer and that superconducting cable line 100 includes magnetic shield members 3A, 3B, 3C for shielding each of superconducting cables 1a, 1b, 1c from a magnetic field outside the cable (may be referred to as external magnetic field hereinafter). In the following, each element will be described in detail. For the sake of convenience of description, the size of superconducting cables 1a, 1b, 1c relative to the size of cable tunnel 4 is shown to be large.

### Superconducting Cable

Superconducting cables 1a, 1b, 1c are each a single-core cable structure having one cable core 10 housed in a thermal insulation pipe 20. Cable core 10 includes, in order from the center, a former 11, a superconducting conductor layer 12, an electrical insulation layer 13, a normal conducting ground layer 14, and a protective layer 15, and includes no superconducting shield layer. For these constituent members each, a known structure and/or a known material may be used.

Former 11 is used as a support for the superconducting conductor layer, a tensile strength member for the cable, and/or a current-carrying path for shunting accidental current when an accident such as short circuit or ground fault occurs, for example. In the case where former 11 is used to also serve as a current-carrying path, a solid body or a hollow body (tubular body) made of a normal conducting material such as copper or aluminum may suitably be used for former 11. The solid body may for example be a stranded wire made up of a plurality of copper wires stranded together, and each copper wire has an electrically insulating coating such as enamel for example. Around the outer periphery of former 11, an electrically insulating tape such as kraft paper or PPLP (registered trademark of Sumitomo Electric Industries Ltd.) may be wound to provide a cushion layer (not shown).

Superconducting conductor layer 12 may be a single layer or multiple layers of a spirally wound tape-like wire having an oxide superconducting conductor, for example, a Bi2223-based superconducting tape wire (Ag-Mn sheath wire). Besides, an RE123-based thin-film wire (RE: rare earth element such as Y, Ho, Nd, Sm, Gd, or the like) may also be used for superconducting conductor layer 12. In the case where one superconducting conductor layer 12 is a multilayer structure, an interlayer insulating layer formed of wound electrically insulating paper such as kraft paper may be formed between the superconducting wires.

Electrical insulation layer 13 may be a wound tape-like electrically insulating material like PPLP for example, such as electrically insulating paper tape like kraft paper, semisynthetic electrically insulating tape which is a composite of kraft paper and a plastic.

Normal conducting ground layer 14 is a layer provided outside the electrically insulating layer to form a ground potential, like the conventional OF cable or CV cable, and may be a wound metal tape made of a normal conducting material like copper. Accordingly, an electric field distribution in electrical insulation layer 13 can be made uniform and a stable electrical insulation performance can be obtained, which is identical to that of the existing cable. Normal conducting ground layer 14 is grounded via a ground line (not shown). Normal conducting ground layer 14 can be single-point grounded for example to prevent flow of induced current due to a magnetic field from superconducting conductor layer 12.

Protective layer 15 is disposed as an outermost layer of cable core 10, and provided chiefly for the purposes of mechanical protection of members disposed inside protective layer 15, and ensured electrical insulation between normal conducting ground layer 14 and thermal insulation pipe 20. Protective layer 15 may be a wound electrically insulating paper tape like kraft paper, or semisynthetic electrically insulating paper which is a composite of kraft paper and a plastic, such as a wound tape-like PPLP, for example.

Thermal insulation pipe 20 is a double-structure corrugated pipe having an inner pipe 21 and an outer pipe 22 made of stainless steel. A vacuum is produced in a space between inner pipe 21 and outer pipe 22 to form a vacuum thermal insulation layer in this space. In the vacuum thermal insulation layer, an insulator (not shown) such as SUPERINSULATION (trade name) may be disposed for the sake of enhancing thermal insulation. In inner pipe 21 (the space between cable core 10 and inner pipe 21), refrigerant C is flown. Instead of forming thermal insulation pipe 20 of a corrugated pipe, it may be formed of a straight pipe. On the outer periphery of outer pipe 22, an anticorrosive layer 23 made of a resin such as polyvinyl chloride is provided.

Since each superconducting cable 1a, 1b, 1c has no superconducting shield layer, current flowing in superconducting conductor layer 12 causes a magnetic field (external magnetic field) to be generated outside each superconducting cable 1a, 1b, 1c. Namely, each superconducting cable 1a, 1b, 1c is a magnetic field generating cable. Thus, superconducting cable 1a is influenced by an external magnetic field generated from superconducting cable 1b and an external magnetic field generated from superconducting cable 1c. Likewise, superconducting cable 1b is influenced by an external magnetic field generated from superconducting cable 1c and an external magnetic field generated from superconducting cable 1a, and superconducting cable 1c is influenced by an external magnetic field generated from superconducting cable 1a and an external magnetic field generated from superconducting cable 1b. In view of this, magnetic shield members 3A, 3B, 3C can each be disposed between corresponding superconducting cables among superconducting cables 1a, 1b, 1c, to thereby suppress an influence of the external magnetic field exerted on each of superconducting cables 1a, 1b, 1c.

### Magnetic Shield Member

Magnetic shield members 3A, 3B, 3C are each a plate-shaped body having a ferromagnetic layer 31 made of a ferromagnetic material. "Ferromagnetic material" herein refers to a material having a relative permeability of not less than 500. The relative permeability may preferably be not less than 1000, and more preferably not less than 5000. Examples of the material satisfying such a relative permeability may for example be iron and iron alloy.

Magnetic shield members 3A, 3B, 3C each have ferromagnetic layer 31 and therefore, when an external magnetic field is applied to magnetic shield members 3A, 3B, 3C, magnetic flux lines of the external magnetic field can be guided along ferromagnetic layer 31 and the orientation of the external magnetic field can be changed by ferromagnetic layer 31. In the external magnetic field applied to superconducting cables 1a, 1b, 1c, chiefly a vertical magnetic field is a main cause of generation of the eddy current loss in each thermal insulation pipe 20. Therefore, the orientation of the vertical magnetic field can be changed to reduce (block) the external magnetic field causing the eddy current loss.

Magnetic shield members 3A, 3B, 3C are each disposed between corresponding superconducting cables among superconducting cables 1a, 1b, 1c. Specifically, magnetic shield member 3A is disposed between superconducting cables 1a, 1b for blocking an external magnetic field generated from superconducting cable 1a and an external magnetic field generated from superconducting cable 1b. Magnetic shield member 3B is disposed between superconducting cables 1b, 1c for blocking an external magnetic field generated from superconducting cable 1b and an external magnetic field generated from superconducting cable 1c. Magnetic shield member 3C is disposed between superconducting cables 1c, 1a for blocking an external magnetic field generated from superconducting cable 1c and an external magnetic field generated from superconducting cable 1a. Since three superconducting cables 1a, 1b, 1c are disposed here in a triangular arrangement, three plate-shaped magnetic shield members 3A, 3B, 3C are each disposed to extend toward the center of the triangle formed by three superconducting cables 1a, 1b, 1c, as seen in a transverse cross section of superconducting cable line 100 (see Fig. 1). It should be noted that three magnetic shield members 3A, 3B, 3C are not electromagnetically connected but are electromagnetically independent of each other. Three magnetic shield members 3A, 3B, 3C are all identical to each other in shape and material.

Magnetic shield members 3A, 3B, 3C are each disposed at a position that enables corresponding superconducting cable 1a, 1b, 1c to be shielded from the external magnetic field. Here, as seen in a transverse cross section of superconducting cable line 100 (see Fig. 1), magnetic shield members 3A, 3B, 3C are each disposed at the center of a line connecting respective centers of superconducting cables (cable cores) adjacent to each other, so that the magnetic shield member extends in the direction orthogonal to the aforementioned line. Each magnetic shield member 3A, 3B, 3C is disposed in only the region across which adjacent superconducting cables face each other. Namely, each magnetic shield member 3A, 3B, 3C is not disposed to extend in the circumferential direction of each superconducting cable 1a, 1b, 1c. The eddy current loss generated in magnetic shield member 3A, 3B, 3C tends to be larger as the volume of magnetic shield member 3A, 3B, 3C is larger. It is therefore preferable for magnetic shield member 3A, 3B, 3C to have a size that is enough to enable adjacent superconducting cables to be shielded from respective external magnetic fields, and not to have a size which is large to an unnecessary extent.

Magnetic shield members 3A, 3B, 3C are each disposed to extend discontinuously in the longitudinal direction of superconducting cables 1a, 1b, 1c (not shown). In this way, eddy current path along the longitudinal direction of magnetic shield members 3A, 3B, 3C can be separated and therefore the eddy current loss in magnetic shield members 3A, 3B, 3C can be reduced. While magnetic shield members 3A, 3B, 3C are likely to rise in temperature due to the Joule heat which causes the eddy current loss and thereby become heat retention members, magnetic shield members 3A, 3B, 3C are discontinuous in the longitudinal direction and therefore the heat retention effect is reduced.

Magnetic shield members 3A, 3B, 3C may have any plate-shape that enables the magnetic shield member to be disposed at a position where a vertical magnetic field of the external magnetic field is applied, and may have a cross section in a rectangular shape (see Fig. 1), an arc shape, or the like.

Respective ends of magnetic shield members 3A, 3B, 3C may be mechanically connected together by a member made of an electrically insulating material (electrically insulating member). In this way, magnetic shield members 3A, 3B, 3C are made easy to handle as an integrated member and easy to dispose at a predetermined position.

Ferromagnetic layer 31 may have a saturated magnetic flux density of not less than 1 T. The fact that the saturated magnetic flux density is not less than 1 T produces an increased effect of changing the orientation of the external magnetic field (vertical magnetic field) by ferromagnetic layer 31, and therefore the thickness of ferromagnetic layer 31 can be reduced. More preferably, the saturated magnetic flux density is not less than 1.5 T, not less than 1.6 T, and particularly not less than 1.9 T. The reduced thickness of ferromagnetic layer 31 enables the volume of ferromagnetic layer 31 to be reduced, and therefore the eddy current loss in magnetic shield members 3A, 3B, 3C are still easier to reduce.

Ferromagnetic layer 31 may have an electrical conductivity of not more than 12 MS/m (megasiemens per meter). The fact that the electrical conductivity is not more than 12 MS/m makes it easy to reduce the eddy current flowing in ferromagnetic layer 31, and therefore the eddy current loss in magnetic shield members 3A, 3B, 3C is still easier to reduce. More preferably, the electrical conductivity is not more than 8 MS/m, not more than 5 MS/m, and particularly not more than 2 MS/m.

Magnetic shield members 3A, 3B, 3C may each have a thickness of not less than 2 mm and not more than 10 mm. The fact that the thickness of each magnetic shield member 3A, 3B, 3C falls in the above-defined range makes it easy to reduce the eddy current loss in thermal insulation pipe 20 and reduce the eddy current loss in magnetic shield members 3A, 3B, 3C. The thickness of each magnetic shield member 3A, 3B, 3C is more preferably not less than 3 mm and not more than 8 mm, and approximately 5 mm in particular.

Magnetic shield members 3A, 3B, 3C may each be a laminated body made up of a plurality of ferromagnetic layers superposed with an electrically insulating material interposed in between. At this time, each ferromagnetic layer is preferably not more than 2.5 mm in thickness. A smaller thickness of each ferromagnetic layer makes it easier to reduce the eddy current loss in each ferromagnetic layer, and accordingly makes it easier to reduce the eddy current loss in the magnetic shield member. In the case where magnetic shield members 3A, 3B, 3C are each a laminated body, the thickness of each ferromagnetic layer is more preferably not more than 2 mm, not more than 1 mm, and particularly not more than 0.5 mm, not more than 0.3 mm.

Each ferromagnetic layer may be an electromagnetic steel sheet. The electromagnetic steel sheet is a material containing an additive element such as silicon in iron of high purity, and undergoing a sophisticated metallurgical treatment to thereby reduce an iron loss generated under an alternating magnetic field. A higher content of the additive element such as silicon enables the electrical conductivity to be reduced further, enables the eddy current loss in the magnetic shield member to be reduced further, and the eddy current loss in the thermal insulation pipe to be reduced further. Moreover, each ferromagnetic layer may be an electromagnetic steel sheet having a thickness of not more than 0.5 mm, to thereby enable the eddy current loss in the magnetic shield member and the eddy current loss in the thermal insulation pipe to be further reduced.

### Other Elements: Refrigerant Pipe

This superconducting cable line may include a refrigerant pipe (not shown) connected to superconducting cables 1a, 1b, 1c to form a circulation path for refrigerant. The refrigerant pipe is a thermal insulation pipe having an inner pipe to be filled with refrigerant and an outer pipe disposed outside the inner pipe, and any pipe similarly configured to the aforementioned thermal insulation pipe 20 may be used as the refrigerant pipe. The superconducting cable line includes a magnetic shield member interposed between the refrigerant pipe and a magnetic field generating cable (aforementioned superconducting cable 1a, 1b, 1c for example) applying a magnetic field to the refrigerant pipe, for shielding the refrigerant pipe from the external magnetic field. The magnetic shield member is configured similarly to the aforementioned magnetic shield members 3A, 3B, 3C. The refrigerant pipe has one end connected to a cooling system and the other end connected to a terminal connecting portion, and is coupled through the terminal connecting portion with thermal insulation pipes 20 of superconducting cables 1a, 1b, 1c. The refrigerant cooled by a refrigerator of the cooling system is sent to thermal insulation pipes 20 of superconducting cables 1a, 1b, 1c to flow in thermal insulation pipes 20, and is thereafter returned to the cooling system through the refrigerant pipe connected to the terminal connecting portion. Namely, respective thermal insulation pipes 20 of superconducting cables 1a, 1b, 1c serve as a forward path for the refrigerant and the refrigerant pipe serves as a return path for the refrigerant. Since the magnetic shield member is disposed between the refrigerant pipe (thermal insulation pipe) and the magnetic field generating cable, the external magnetic field applied to the refrigerant pipe can be reduced and the load on the refrigerator cooling the refrigerant in the refrigerant pipe can be reduced.

### [Method of Installing Superconducting Cables]

Superconducting cables 1a, 1b, 1c can be installed through preparation of superconducting cables 1a, 1b, 1c and magnetic shield members 3A, 3B, 3C → installation of superconducting cables 1a, 1b, 1c in a cable tunnel → disposition of magnetic shield members 3A, 3B, 3C each between corresponding superconducting cables among superconducting cables 1a, 1b, 1c. Superconducting cables 1a, 1b, 1c manufactured in a factory and wound around a drum are prepared. Magnetic shield members 3A, 3B, 3C are prepared independently of superconducting cables 1a, 1b, 1c. When superconducting cables 1a, 1b, 1c are installed in the cable tunnel, superconducting cables 1a, 1b, 1c are fixed with fixture members or the like at intervals in the longitudinal direction of the cables. The fixture member may for example have three holding portions to be fit on respective outer peripheries of superconducting cables 1a, 1b, 1c, and superconducting cables 1a, 1b, 1c can be fit in respective holding portions to thereby fix the positional relation between superconducting cables 1a, 1b, 1c. The magnetic shield members can be installed for example by being attached to the aforementioned fixture members. At this time, each magnetic shield member and the fixture members are mechanically connected through an electrically insulating member. Generally a working space is provided in the cable tunnel for attaching the magnetic shield member to the superconducting cable, and therefore, the magnetic shield members can be easily disposed after installation of the superconducting cables.

In the case where three superconducting cables 1a, 1b, 1c having no superconducting shield layer are disposed in a triangular arrangement in superconducting cable line 100, superconducting cables 1a, 1b, 1c exert respective influences of magnetic fields on each other. Since magnetic shield members 3A, 3B, 3C are each disposed between corresponding superconducting cables among superconducting cables 1a, 1b, 1c, the external magnetic field (vertical magnetic field) causing the eddy current loss in thermal insulation pipe 20 of each superconducting cable 1a, 1b, 1c can be reduced. Accordingly, generation of the eddy current loss due to the external magnetic field in thermal insulation pipe 20 of each superconducting cable 1a, 1b, 1c can be suppressed. Since the eddy current loss generated particularly in inner pipe 21 included in thermal insulation pipe 20 and located on the side of the low temperature portion can be reduced, the load on the refrigerator can be reduced.

### <Second Embodiment>

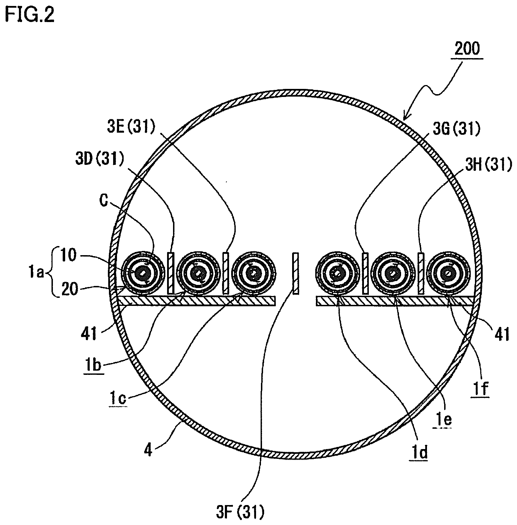

In connection with a second embodiment, a description will be given of a superconducting cable line 200 as shown in Fig. 2 in which six superconducting cables 1a to 1f having no superconducting shield layer are linearly arranged close to each other, and magnetic shield members 3D to 3H are each disposed between corresponding superconducting cables among superconducting cables 1a to 1f. The second embodiment is different from the first embodiment in only the manner in which superconducting cables 1a to 1f and magnetic shield members 3D to 3H are arranged, and is similar to the first embodiment in other features. The following description will be given chiefly of the difference.

Superconducting cables 1a, 1b, 1c are arranged linearly on the same support platform 41, and superconducting cables 1d, 1e, 1f are arranged linearly on the same support platform 41. Magnetic shield members 3D to 3H are disposed respectively between adjacent superconducting cables 1a and 1b, between 1b and 1c, between 1c and 1d, between 1d and 1e, and 1e and 1f. Magnetic shield members 3D to 3H are not electromagnetically connected to support platform 41 but mechanically connected thereto thorough an electrically insulating member (not shown). Since magnetic shield members 3D to 3H are not electromagnetically connected to support platform 41 but are independent of each other, increase of the eddy current loss in magnetic shield members 3D to 3H can be suppressed, even when support platform 41 is made of a ferromagnetic material or electrically conductive material.

Even when superconducting cable line 200 includes a plurality of superconducting cables 1a to 1f having no superconducting shield layer and arranged linearly, the fact that magnetic shield members 3D to 3H are each disposed between corresponding superconducting cables among superconducting cables 1a to 1f enables reduction of the external magnetic field (vertical magnetic field) causing the eddy current loss in respective thermal insulation pipes 20 of superconducting cables 1a to 1f. Accordingly, generation of the eddy current loss due to the external magnetic field in thermal insulation pipes 20 of superconducting cables 1a to 1f can be suppressed. Since the eddy current loss generated particularly in inner pipe 21 included in thermal insulation pipe 20 and located on the side of the low temperature portion can be reduced, the load on the refrigerator can be reduced.

### <Third Embodiment>

Regarding the first and second embodiments, the description has been given of the form for blocking magnetic fields applied to each other among a plurality of superconducting cables each including the cable core housed inside the thermal insulation pipe. Regarding a third embodiment, a description will be given of the form in which the cable core is not housed inside the thermal insulation pipe. For example, when the inside of the thermal insulation pipe is filled with refrigerant like the refrigerant pipe described above in connection with the first embodiment and an external magnetic field is applied to the thermal insulation pipe, an eddy current loss is generated in the thermal insulation pipe, resulting in a load on a refrigerator cooling the refrigerant. In view of this, between the thermal insulation pipe and a magnetic field generating cable which applies a magnetic field to the thermal insulation pipe, a magnetic shield member can be provided to shield the thermal insulation pipe from the external magnetic field, and thereby reduce the eddy current loss and reduce the load on the refrigerator. This magnetic shield member is configured similarly to the magnetic shield member in the first embodiment.

### <Test Examples>

### - Test Example 1

Superconducting cables of three phases each having no superconducting shield layer and each including a cable core housed in a thermal insulation pipe were disposed in a triangular arrangement, plate-shaped magnetic shield members were each disposed between corresponding superconducting cables, and a loss generated in the thermal insulation pipe and a loss generated in the magnetic shield member were exampled by the FEM analysis. An inner pipe of the thermal insulation pipe had an electrical conductivity of 2.02 MS/m and the outer pipe thereof had an electrical conductivity of 1.45 MS/m. The center-to-center distance between the cables of the phases was 350 mm. Conductor current of 12 kArms was applied to a superconducting conductor layer of the cable of each phase.

### - Test Example 1-1

In Test Example 1-1, the magnetic shield members are independent members which are not electromagnetically connected to each other but are independent of each other (see Fig. 1). Each magnetic shield member is disposed so that its one end is located at 25 mm from the center of the three phases. Each magnetic shield member is formed of a single ferromagnetic layer of 10 mm in thickness. The ferromagnetic layer is made of pure iron. Pure iron has an electrical conductivity of 10.44 MS/m.

### - Test Example 1-2

In Test Example 1-2, the magnetic shield members are independent members which are not electromagnetically connected to each other but are independent of each other (similarly to Test Example 1-1). Each magnetic shield member is formed of a single conductor layer of 10 mm in thickness. The conductor layer is made of aluminum. Aluminum has an electrical conductivity of 34.45 MS/m.

### - Test Example 1-3

In Test Example 1-3, the magnetic shield members are an integrated member in which the magnetic shield members are electromagnetically connected to each other. Respective ends of the magnetic shield members are electromagnetically connected together at the center of the three phases. Each magnetic shield member is formed of a ferromagnetic layer similar to that of Test Example 1-1.

### - Test Example 1-4

In Test Example 1-4, the magnetic shield members are an integrated member in which the magnetic shield members are electromagnetically connected to each other (similarly to Test Example 1-3). Each magnetic shield member is formed of a conductor layer similar to that of Test Example 1-2.

### - Test Example 1-5

In Test Example 1-5, the magnetic shield member is not disposed.

Regarding Test Examples 1-1 to 1-5, the losses generated in the thermal insulation pipe (inner pipe and outer pipe) and the loss generated in the magnetic shield member are shown in Table 1. In Test Example 1-1, both the loss in the inner pipe and the loss in the outer pipe were reduced to be a half of the loss in Test Example 1-5 in which the magnetic shield member was not disposed. In particular, the loss of the inner pipe could be reduced to 3 W/m or less. In Test Example 1-2, although the loss in the inner pipe and the loss in the outer pipe were both reduced as compared with Test Example 1-5, the loss in the inner pipe was not less than 4 W/m and the reduction ratio is approximately 20%. Namely, it has been found that the shielding effect produced by the magnetic shield member is not sufficiently high in Test Example 1-2. In the case where the magnetic shield member is formed of a ferromagnetic layer and an external magnetic field (vertical magnetic field) is applied to the magnetic shield member, the orientation of the external magnetic field is changed and the magnetic field applied to the thermal insulation pipe is reduced. In contrast, in the case where the magnetic shield member is formed of a conductor layer, even when an external magnetic field is applied to the magnetic shield member, the orientation of the external magnetic field remains the same and the external magnetic field is applied through the magnetic shield member to the thermal insulation pipe. The external-magnetic-field shielding effect is considered to be reduced for this reason. In Test Example 1-3, while the loss in the inner pipe and the loss in the outer pipe were both reduced as compared with Test Example 5, the loss in the inner pipe exceeded 3 W/m. In Test Example 1-4, while the loss in the inner pipe and the loss in the outer pipe were both reduced as compared with Test Example 1-5, the loss in the inner pipe exceeded 3 W/m. Namely, it has been found that, in Test Examples 1-3 and 1-4 in which the magnetic shield members are electromagnetically coupled together, the shielding effect produced by the magnetic shield member is not sufficiently high. In the case where the magnetic shield members are coupled together, the eddy current loss generated in each magnetic shield member is larger as compared with the case where the magnetic shield members are not coupled together. The shielding effect produced by the magnetic shield member is considered to be reduced for this reason.

**Table 1**

| | shape | material | loss (W/m) | | |
|---|---|---|---|---|---|
| | | | inner pipe | outer pipe | magnetic shield member |
| 1-1 | coupled | pure iron | 2.9 | 3.8 | 3500 |
| 1-2 | | aluminum | 4.4 | 5.8 | 227 |
| 1-3 | not coupled | pure iron | 3.3 | 4.3 | 4162 |
| 1-4 | | aluminum | 3.4 | 4.5 | 294 |
| 1-5 | - | - | 5.6 | 7.1 | - |

### - Test Example 2

In Test Example 2, the thickness of the magnetic shield member for the aforementioned Test Example 1-1 was used as a parameter, and the losses generated in the thermal insulation pipe and the loss generated in the magnetic shield member were examined by the FEM analysis (Test Examples 2-1 to 2-7; Test Example 2-7 is identical to the above-described Test Example 1-1). The magnetic shield member is formed of a single ferromagnetic layer. For each Test Example, the losses generated in the thermal insulation pipe and the loss generated in the magnetic shield member are shown in Table 2.

**Table 2**

| | thickness (mm) | loss (W/m) | | |
|---|---|---|---|---|
| | | inner pipe | outer pipe | magnetic shield member |
| 2-1 | 0.1 | 5.4 | 7.1 | 3 |
| 2-2 | 0.2 | 5.2 | 6.9 | 7 |
| 2-3 | 0.5 | 4.7 | 6.1 | 23 |
| 2-4 | 1.0 | 3.9 | 5.1 | 86 |
| 2-5 | 2.0 | 2.7 | 3.5 | 433 |
| 2-6 | 5.0 | 2.0 | 2.7 | 2288 |
| 2-7 | 10.0 | 2.9 | 3.8 | 3500 |

It has been found that the thickness of the magnetic shield member of 2 mm or more enables the loss in the inner pipe to be reduced to 3 W/m or less. In particular, the thickness of the magnetic shield member of 5 mm enables the loss in the inner pipe to be reduced to 2 W/m. It has also been found that a greater thickness of the magnetic shield member is accompanied by a greater loss in the magnetic shield member. A reason for this is considered as follows. A greater thickness of the magnetic shield member is accompanied by a greater volume thereof, and accordingly the eddy current loss generated in the magnetic shield member is increased. As the eddy current loss in the magnetic shield member increases, the shielding effect produced by the magnetic shield member decreases. For this reason, the loss in the inner pipe in Test Example 2-7 is considered to be larger than that in Test Example 2-6.

### - Test Example 3

In Test Example 3, the magnetic shield member with a thickness of 10 mm in Test Example 1-1 is a laminated body made up of a plurality of superposed ferromagnetic layers, the thickness of each ferromagnetic layer is used as a parameter, and the losses generated in the thermal insulation pipe and the loss generated in the magnetic shield member were examined by the FEM analysis (Text Examples 3-1 to 3-6; Test Example 3-1 is identical to Test Example 1-1). While an electrically insulating material is interposed between the ferromagnetic layers, the thickness of the electrically insulating material is not taken into consideration for Test Example 3. For each Test Example, the losses generated in the thermal insulation pipe and the loss generated in the magnetic shield member are shown in Table 3.

**Table 3**

| | thickness (mm) | loss (W/m) | | |
|---|---|---|---|---|
| | | inner pipe | outer pipe | magnetic shield member |
| 3-1 | 10.0 | 2.9 | 3.8 | 3500 |
| 3-2 | 5.0 | 1.8 | 2.3 | 1681 |
| 3-3 | 2.5 | 1.6 | 2.0 | 573 |
| 3-4 | 1.25 | 1.5 | 2.0 | 221 |
| 3-5 | 0.5 | 1.5 | 2.0 | 147 |
| 3-6 | 0.25 | 1.5 | 2.0 | 87 |

It has been found that since the magnetic shield member is the laminated body made up of a plurality of ferromagnetic layers superposed with an electrically insulating material interposed in between, both the losses in the thermal insulation pipe and the loss in the magnetic shield member can be reduced. When the magnetic shield member was a laminated body made up of ferromagnetic layers each having a thickness of 5.0 mm or less, the loss in the inner pipe could be reduced to 2 W/m or less. When the thickness of each ferromagnetic layer was thinner, namely 1.25 mm or less, the loss in the inner pipe could further be reduced to 1.5 W/m. It has also been found that a smaller thickness of each ferromagnetic layer enables further reduction of the loss in the magnetic shield member. When the thickness of each ferromagnetic layer was 2.5 mm or less, the loss in the magnetic shield member could be reduced to 600 W/m or less. Moreover, when the thickness of each ferromagnetic layer was 0.5 mm or less, the loss in the magnetic shield member could be reduced to 150 W/m or less. In particular, when the thickness of each ferromagnetic layer was 0.25 mm or less, the loss in the magnetic shield member could be reduced to 100 W/m or less. A reason for this is considered as follows. A smaller thickness of each magnetic shield member is accompanied by a smaller volume thereof, and therefore the eddy current loss in the magnetic shield member can be reduced. The reduced eddy current loss in the magnetic shield member causes enhancement of the shielding effect produced by the magnetic shield member, and therefore the loss in the inner pipe can be reduced to 1.5 W/m.

### - Test Example 4

In Test Example 4, the magnetic shield member having a thickness of 5 mm is a laminated body made up of a plurality of superposed ferromagnetic layers, and the thickness of each ferromagnetic layer is used as a parameter to examine the losses generated in the thermal insulation pipe and the loss generated in the magnetic shield member by the FEM analysis (Test Examples 4-1 to 4-5). The conditions except for the thickness of the magnetic shield member in Test Example 4 are similar to those of Test Example 3. While an electrically insulating material is interposed between the ferromagnetic layers, the thickness of the electrically insulating material is not taken into consideration for Test Example 4. For each Test Example, the losses generated in the thermal insulation pipe and the loss generated in the magnetic shield member are shown in Table 4.

**Table 4**

| | thickness (mm) | loss (W/m) | | |
|---|---|---|---|---|
| | | inner pipe | outer pipe | magnetic shield member |
| 4-1 | 5.0 | 2.0 | 2.7 | 2288 |
| 4-2 | 2.5 | 1.7 | 2.2 | 811 |
| 4-3 | 1.25 | 1.6 | 2.1 | 291 |
| 4-4 | 0.5 | 1.6 | 2.1 | 147 |
| 4-5 | 0.25 | 1.6 | 2.1 | 84 |

Like Test Example 3, it has been found that since the magnetic shield member is a laminated body made up of a plurality of ferromagnetic layers superposed with an electrically insulating material interposed in between, both the losses in the thermal insulation pipe and the loss in the magnetic shield member can be reduced. Namely, it has been found that, in order to reduce both the loss in the inner pipe and the loss in the magnetic shield member, it is effective to superpose thin ferromagnetic layers with an electrically insulating material interposed in between.

### - Test Example 5

In Test Example 5, the magnetic shield member having a thickness of 10 mm was a laminated body made up of a plurality of superposed ferromagnetic layers, each ferromagnetic layer was an electromagnetic steel sheet with the conditions shown in Table 5 (type (whether the orientation of the crystal axis is directional or non-directional), thickness, electrical conductivity, saturated flux density), and the losses generated in the thermal insulation pipe and the loss generated in the magnetic shield member were examined by the FEM analysis (Test Examples 5-1 to 5-10). The arrangement of the superconducting cables and the magnetic shield members and the conditions for energization were similar to those of Test Example 1-1. For each test example, the losses generated in thermal insulation pipe and the loss generated in the magnetic shield member are shown together in Table 5.

**Table 5**

| | type | thickness | electrical conductivity | magnetic flux density | loss (W/m) | | |
|---|---|---|---|---|---|---|---|
| | | (mm) | (MS/m) | (T) | inner pipe | outer pipe | magnetic shield member |
| 5-1 | directional | 0.30 | 2.08 | 1.96 | 1.5 | 2.0 | 25 |
| 5-2 | | 0.23 | 2.00 | 1.96 | 1.5 | 2.0 | 15 |
| 5-3 | | 0.30 | 2.04 | 1.94 | 1.5 | 2.0 | 25 |
| 5-4 | | 0.23 | 2.04 | 1.94 | 1.5 | 2.0 | 16 |
| 5-5 | non-directional | 0.50 | 1.69 | 1.57 | 1.5 | 2.0 | 30 |
| 5-6 | | 0.50 | 2.13 | 1.61 | 1.5 | 2.0 | 35 |
| 5-7 | | 0.50 | 2.56 | 1.63 | 1.5 | 2.0 | 42 |
| 5-8 | | 0.50 | 7.14 | 1.68 | 1.5 | 2.0 | 93 |
| 5-9 | | 0.35 | 1.85 | 1.58 | 1.5 | 2.0 | 31 |
| 5-10 | | 0.35 | 2.56 | 1.62 | 1.5 | 2.0 | 41 |

It has been found that since the magnetic shield member is a laminated body made up of a plurality of electromagnetic steel sheets superposed with an electrically insulating material interposed in between, the loss in the inner pipe can be reduced to 1.5 W/m or less and the loss in the magnetic shield member can be reduced to 100 W/m or less, particularly 50 W/m or less. In Test Example 5, no difference is found depending on whether the orientation of the electromagnetic steel sheet is directional or non-directional. As to the thickness of each electromagnetic steel sheet, it has been found that a smaller thickness tends to cause further reduction of the loss in the magnetic shield member. In particular, a smaller thickness of the electromagnetic steel sheet of 0.23 mm enables the loss in the magnetic shield member to be reduced to 20 W/m or less. As to the electrical conductivity of each electromagnetic steel sheet, it has been found that a lower electrical conductivity tends to cause further reduction of the loss in the magnetic shield member. In particular, a lower electrical conductivity of the electromagnetic steel sheet of 3 MS/m or less enables the loss in the magnetic shield member to be reduced to 50 W/m or less.

### - Test Example 6

In Test Example 6, the magnetic shield member having a thickness of 5 mm was a laminated body made up of a plurality of superposed ferromagnetic layers, each ferromagnetic layer was an electromagnetic steel sheet with the conditions similar to those of Test Example 5, and the losses generated in the thermal insulation pipe and the loss generated in the magnetic shield member were examined by the FEM analysis (Test Examples 6-1 to 6-10). The conditions except for the thickness of the magnetic shield member in Test Example 6 are similar to those of Test Example 5. For each Test Example, the losses generated in the thermal insulation pipe and the loss generated in the magnetic shield member are shown together in Table 6.

**Table 6**

| | type | thickness | electrical conductivity | magnetic flux density | loss (W/m) | | |
|---|---|---|---|---|---|---|---|
| | | (mm) | (MS/m) | (T) | inner pipe | outer pipe | magnetic shield member |
| 6-1 | directional | 0.30 | 2.08 | 1.96 | 1.6 | 2.1 | 24 |
| 6-2 | | 0.23 | 2.00 | 1.96 | 1.6 | 2.1 | 15 |
| 6-3 | | 0.30 | 2.04 | 1.94 | 1.6 | 2.1 | 24 |
| 6-4 | | 0.23 | 2.04 | 1.94 | 1.6 | 2.1 | 16 |
| 6-5 | non-directional | 0.50 | 1.69 | 1.57 | 1.6 | 2.1 | 32 |
| 6-6 | | 0.50 | 2.13 | 1.61 | 1.6 | 2.1 | 36 |
| 6-7 | | 0.50 | 2.56 | 1.63 | 1.6 | 2.1 | 44 |
| 6-8 | | 0.50 | 7.14 | 1.68 | 1.6 | 2.1 | 94 |
| 6-9 | | 0.35 | 1.85 | 1.58 | 1.6 | 2.1 | 32 |
| 6-10 | | 0.35 | 2.56 | 1.62 | 1.6 | 2.1 | 42 |

Like Test Example 5, it has been found that since the magnetic shield member is a laminated body made up of a plurality of electromagnetic steel sheets superposed with an electrically insulating material interposed in between, the loss in the inner pipe can be reduced to 1.6 W/m or less, and the loss in the magnetic shield member can be reduced to 100 W/m or less, particularly 50 W/m or less. Namely, it has been found that, in order to reduce both the loss in the inner pipe and the loss in the magnetic shield member, it is effective to superpose electromagnetic steel sheets with an electrically insulating material interposed in between.

### INDUSTRIAL APPLICABILITY

The superconducting cable line of the present invention is suitably applicable to a power transmission line where there is a possibility that a magnetic field is externally applied to the superconducting cable.

### REFERENCE SIGNS LIST

100, 200 superconducting cable line; 1a, 1b, 1c, 1d, 1e, 1f superconducting cable; 10 cable core; 11 former; 12 superconducting conductor layer; 13 electrical insulation layer; 14 normal conducting ground layer; 15 protective layer; 20 thermal insulation pipe; 21 inner pipe; 22 outer pipe; 23 anticorrosive layer; C refrigerant; 3A-3C, 3D-3H magnetic shield member; 31 ferromagnetic layer; 14 cable tunnel; 41 support platform

## Claims

1. A superconducting cable line comprising (100):
a plurality of superconducting cables (1a, 1b, 1c), each of the superconducting cables (1a, 1b, 1c) including
a cable core (10) having a superconducting conductor layer (12), and
a thermal insulation pipe (20) housing the cable core (10) and having an inner pipe (21) to be filled with refrigerant (C) and an outer pipe (22) disposed outside the inner pipe (21); and
a plurality of magnetic shield members (3A, 3B, 3C) in a plate shape disposed between an adjacent pairs of the superconducting cables, each of the superconducting cables (1a, 1b, 1c) being configured to generate an external magnetic field, a pair (3A, 3B) of the magnetic shield members (3A, 3B, 3C) being configured to shield the superconducting cable (1a) disposed between the pair (3A, 3B) of the magnetic shield members (3A, 3B, 3C) from the magnetic field,
each of the magnetic shield member (3A, 3B, 3C) having a ferromagnetic layer (31) made of a ferromagnetic material, and the magnetic shield members being electromagnetically independent of each other.

2. The superconducting cable line (100) according to claim 1, wherein
the three superconducting cables (1a, 1b, 1c) are disposed in a triangular arrangement, and
the magnetic shield members (3A, 3B, 3C) each are disposed between corresponding superconducting cables (1a, 1b, 1c) among the three superconducting cables.

3. The superconducting cable line (100) according to claim 1 or 2, wherein the ferromagnetic layer (31) has a saturated magnetic flux density of not less than 1 T.

4. The superconducting cable line (100) according to any one of claims 1 to 3, wherein the ferromagnetic layer (31) has an electrical conductivity of not more than 5 MS/m.

5. The superconducting cable line (100) according to any one of claims 1 to 4, wherein each magnetic shield member (3A, 3B, 3C) has a thickness of not less than 2 mm and not more than 10 mm.

6. The superconducting cable line (100) according to any one of claims 1 to 5, wherein each magnetic shield member (3A, 3B, 3C) is a laminated body made up of a plurality of the ferromagnetic layers (31) superposed with an electrically insulating material interposed in between.

7. The superconducting cable line (100) according to claim 6, wherein the ferromagnetic layers (31) each have a thickness of not more than 0.5 mm.

8. The superconducting cable line (100) according to any one of claims 1 to 7, wherein the ferromagnetic layer (31) is an electromagnetic steel sheet.

## Patentansprüche

1. Supraleitende Kabelleitung (100), umfassend:
mehrere supraleitende Kabel (1a, 1b, 1c), wobei jedes der supraleitenden Kabel (1a, 1b, 1c) aufweist:
eine Kabelseele (10) mit einer supraleitenden Leiterschicht (12) und
ein Wärmeisolierungsrohr (20), in dem sich die Kabelseele (10) befindet, und das ein inneres Rohr (21), das mit Kühlmittel (C) befüllt werden soll, und ein äußeres Rohr (22), das außerhalb des inneren Rohrs (21) angeordnet ist, aufweist, und
mehrere magnetische Abschirmelemente (3A, 3B, 3C) in einer Plattenform, die zwischen einem benachbarten Paar der supraleitenden Kabel angeordnet sind, wobei jedes der supraleitenden Kabel (1a, 1b, 1c) dazu ausgelegt ist, ein externes Magnetfeld zu erzeugen, wobei ein Paar (3A, 3B) der magnetischen Abschirmelemente (3A, 3B, 3C) dazu ausgelegt ist, das supraleitende Kabel (1a), das zwischen dem Paar (3A, 3B) der magnetischen Abschirmelemente (3A, 3B, 3C) angeordnet ist, von dem Magnetfeld abzuschirmen,
wobei jedes der magnetischen Abschirmelemente (3A, 3B, 3C) eine aus einem ferromagnetischen Material bestehende ferromagnetische Schicht (31) aufweist und die magnetischen Abschirmelemente elektromagnetisch voneinander unabhängig sind.

2. Supraleitende Kabelleitung (100) nach Anspruch 1, wobei
die drei supraleitenden Kabel (1a, 1b, 1c) in einer dreieckigen Anordnung angeordnet sind, und
die magnetischen Abschirmelemente (3A, 3B, 3C) jeweils zwischen entsprechenden supraleitenden Kabeln (1a, 1b, 1c) von den drei supraleitenden Kabeln angeordnet sind.

3. Supraleitende Kabelleitung (100) nach Anspruch 1 oder 2, wobei die ferromagnetische Schicht (31) eine gesättigte magnetische Flussdichte von wenigstens 1 T aufweist.

4. Supraleitende Kabelleitung (100) nach einem der Ansprüche 1 bis 3, wobei die ferromagnetische Schicht (31) eine elektrische Leitfähigkeit von höchstens 5 MS/m aufweist.

5. Supraleitende Kabelleitung (100) nach einem der Ansprüche 1 bis 4, wobei jedes magnetische Abschirmelement (3A, 3B, 3C) eine Dicke von wenigstens 2 mm und höchsten 10 mm aufweist.

6. Supraleitende Kabelleitung (100) nach einem der Ansprüche 1 bis 5, wobei jedes magnetische Abschirmelement (3A, 3B, 3C) ein laminiertes Gebilde ist, das aus mehreren der ferromagnetischen Schichten (31) besteht, die mit einem zwischen ihnen eingefügten elektrisch isolierenden Material überlagert sind.

7. Supraleitende Kabelleitung (100) nach Anspruch 6, wobei die ferromagnetischen Schichten (31) jeweils eine Dicke von höchstens 0,5 mm aufweisen.

8. Supraleitende Kabelleitung (100) nach einem der Ansprüche 1 bis 7, wobei die ferromagnetische Schicht (31) ein elektromagnetisches Stahlblech ist.

## Revendications

1. Ligne de câble supraconductrice (100) comprenant:
une pluralité de câbles supraconducteurs (1a, 1b, 1c), chaque câble supraconducteur (1a, 1b, 1c) comprenant
une âme de câble (10) ayant une couche (12) de conducteur supraconducteur, et
un tuyau d'isolation thermique (20) logeant l'âme de câble (10) et comportant une conduite interne (21) à remplir de fluide frigorigène (C) et une conduite externe (22) disposée à l'extérieur de la conduite interne (21); et
une pluralité d'éléments de blindage magnétique (3A, 3B, 3C) en forme de plaque disposée entre une paire de câbles supraconducteurs adjacents, chaque câble supraconducteur (1a, 1b, 1c) étant configuré pour générer un champ magnétique externe, une paire (3A, 3B) des éléments de blindage magnétique (3A, 3B, 3C) étant configurée pour protéger le câble supraconducteur (1a) disposé entre la paire (3A, 3B) d'éléments de blindage magnétique (3A, 3B) du champ magnétique,
chaque élément de blindage magnétique (3A, 3B, 3C) comportant une couche ferromagnétique (31) constituée d'un matériau ferromagnétique, et les éléments de blindage magnétique étant indépendant entre eux du point de vue électromagnétique.

2. Ligne de câble supraconductrice (100) selon la revendication 1, dans lequel les trois câbles supraconducteurs (1a, 1b, 1c) sont disposés en triangle, et les éléments de blindage magnétique (3A, 3B, 3C) sont disposés chacun entre des câbles supraconducteurs correspondants parmi les trois câbles supraconducteurs.

3. Ligne de câble supraconductrice (100) selon la revendication 1 ou 2, dans laquelle la couche ferromagnétique (31) a une densité de flux magnétique saturée d'au moins 1 T.

4. Ligne de câble supraconductrice (100) selon l'une quelconque des revendications 1 à 3, dans laquelle la couche ferromagnétique (31) a une conductivité électrique non supérieure à 5 MS/m.

5. Ligne de câble supraconductrice selon l'une quelconque des revendications 1 à 4, dans laquelle chaque élément de blindage magnétique (3A, 3B, 3C) a une épaisseur d'au moins 2 mm et d'au plus 10 mm.

6. Ligne de câble supraconductrice (100) selon l'une quelconque des revendications 1 à 5, dans laquelle chaque élément de blindage magnétique (3A, 3B, 3C) est un corps stratifié constitué d'une pluralité de couches ferromagnétiques (31) superposées avec un matériau électriquement isolant interposé.

7. Ligne de câble supraconductrice (100) selon la revendication 6, dans laquelle les couches ferromagnétiques (31) ont chacune une épaisseur non supérieure à 0,5 mm.

8. Ligne de câble supraconductrice (100) selon l'une quelconque des revendications 1 à 7, dans laquelle la couche ferromagnétique (31) est une tôle d'acier électromagnétique.
